# EUROPÄISCHE PATENTANMELDUNG

(11) **EP 0 995 628 A2**
(43) Veröffentlichungstag der Anmeldung: **26.04.2000**
(21) Anmeldenummer: 99121128.5
(22) Anmeldetag: 22.10.1999
(51) Int. Cl.: B60N 2/24

(54) **Bidirektionaler Fahrgastsitz für Busse und Bahnen**

(30) Priorität: 23.10.1998 DE 19848932
(71) Anmelder: Siemens Duewag Schienenfahrzeuge GmbH, 47829 Krefeld (DE); Paulussen, Werner, 40545 Düsseldorf (DE)
(72) Erfinder: Neubauer, Jörg, 41069 Mönchengladbach (DE); Paulussen, Werner, 40545 Düsseldorf (DE)

(57) **Zusammenfassung**

Ein bidirektionaler Fahrgastsitz für Busse und Bahnen, besteht aus einem Sitzkörper (1) mit einer Sitzfläche (la) und einer Rückenlehne (2). Der Sitzkörper (1) weist unterhalb seiner einen, ersten Sitzfläche (1a) eine weitere, zweite Sitzfläche (1b) auf. Der Sitzkörper (1) ist um eine außermittig verlaufende Tragachse (3) im Sinne einer wahlweisen Nutzbarkeit der ersten Sitzfläche (1a) oder der zweiten Sitzfläche (1b) schwenkbar. Der Sitzkörper (1) und die Rückenlehne (2) sind durch eine Drehachse (4) miteinander gekoppelt.

## Beschreibung

Die Erfindung betrifft einen bidirektionalen Fahrgastsitz für Busse und Bahnen, bestehend aus einem Sitzkörper mit einer Sitzfläche und einer Rückenlehne.

Bei Reisezugwagen, Stadtbahnwagen und Straßenbahnfahrzeugen ist es allgemein bekannt, eine Anzahl von Sitzen gleichförmig hintereinander - sogenannte Jet-Bestuhlung - und die übrigen Fahrgastsitze einander zugewandt (Vis-a-Vis Bestuhlung) anzuordnen. Für die letztgenannte Vis-a-Vis-Bestuhlung ist aus den Normen DIN 25 101 "Fahrzeugmaße und Sitzanordnung" sowie DIN 25 105 "Hauptmaße von Sitzen" ein Sitzabstand von rund 550 mm abzuleiten, der im Hinblick auf eine bequeme Fuß- und Beinfreiheit nicht unterschritten werden sollte. Für die erstgenannte Jet-Bestuhlung gilt entsprechend ein Sitzabstand vom mindestens 330 mm.

Zum Stand der Technik gehören weiter in Schienenomnibussen der Baureihe VT 98 der Deutschen Bundesbahn eingesetzte Fahrgastsitze für zwei oder drei Personen, bei denen die Rückenlehnen umklappbar sind, so daß die Fahrgäste stets in Fahrtrichtung sitzen oder in Vis-a-Vis Stellung von zwei Rückenlehnen mit Blickkontakt Gespräche führen können. Ein dem Umklappen der jeweiligen Rückenlehne dienendes Gestänge, das freiliegend außerhalb des Sitzkörpers verlaufend am Sitzgestell angelenkt ist, ist ein Nachteil für die Sicherheit (z. B. Gefahr des Einklemmens von Fingern) und ungünstig in bezug auf ein gefälliges Aussehen und ein leichtes Sauberhalten des Fahrgastsitzes.

Der Erfindung liegt die Aufgabe zugrunde, einen Fahrgastsitz auf möglichst einfache Weise so zu gestalten, daß ein geschlossenes System vorliegt und die eingangs erläuterten Mindestabstände in beiden Sitzstellungen eingehalten sind.

Diese Aufgabe wird erfindungsgemäß dadurch gelöst, daß der Sitzkörper unterhalb seiner einen, ersten Sitzfläche eine weitere, zweite Sitzfläche aufweist und um eine außermittig durch den Sitzkörper verlaufende Tragachse im Sinne einer wahlweisen Nutzbarkeit der ersten Sitzfläche oder der zweiten Sitzfläche schwenkbar ist, wobei der Sitzkörper und die Rückenlehne durch eine Drehachse miteinander gekoppelt sind. Für das Einhalten der oben genannten Mindestabstände (550 mm bzw. 330 mm) ist ein entsprechendes Verschieben der Sitzfläche bei deren Schwenkbewegungen wesentlich, welches durch die außermittige Anordnung der Schwenkachse erreicht wird.

Vorteilhafte Ausgestaltungen der Erfindung sind in den Unteransprüchen angegeben.

Der Fahrgastsitz nach der Erfindung paßt in die in der Fahrzeugtechnik üblichen Sitzraster und bietet in beiden Stellungen optimale Freiräume für Füße und Beine, wobei die Rückenlehne stets die ergonomisch richtige Neigung hat. Durch die Ausführung des Sitzes als geschlossenes System ergibt sich weiter vorteilhaft ein sicherer Betrieb ohne Einklemmgefahr und die Möglichkeit zu mutwilligen Beschädigungen (Vandalismus), wobei auch ein gutes Design des Sitzes erreicht wird und dessen Sauberhaltung erleichtert ist.

Im weiteren wird die Erfindung anhand eines Ausführungsbeispiels näher beschrieben, das in der Zeichnung schematisch dargestellt ist. Es zeigen
- Fig. 1: eine Sitzanordnung innerhalb eines Fahrzeuges mit einem bidirektionalen Fahrgastsitz in der Position "Jet-Bestuhlung", in perspektivischer Ansicht,
- Fig. 2: eine der Fig. 1 entsprechende Sitzanordnung, wobei sich der bidirektionale Fahrgastsitz in der Position "Vis-a-Vis-Bestuhlung" befindet,
- Fig. 3: eine die Fig. 1 ergänzende Seitenansicht,
- Fig. 4: eine die Fig. 2 ergänzende Seitenansicht.

Im Fahrgastraum beispielsweise eines Stadtbahnwagens befinden sich feststehende Fahrgastsitze 8, die an der Seitenwandstruktur 5 befestigt sein können. Zwischen zwei dieser feststehenden Fahrgastsitze 8 ist ein bidirektionaler Fahrgastsitz angeordnet, der einen Sitzkörper 1 und eine Rückenlehne 2 aufweist.

Der Sitzkörper 1 des bidirektionalen Fahrgastsitzes, der eine erste Sitzfläche 1a und eine zweite Sitzfläche 1b hat, ist um eine außermittig angeordnete Tragachse 3 schwenkbar, so daß wahlweise die erste Sitzfläche la oder die zweite Sitzfläche 1b genutzt werden können. Der Sitzkörper 1 und Rückenlehne 2 sind durch eine Drehachse 4 miteinander verbunden.

Die Tragachse 3 des bidirektionalen Fahrgastsitzes, die durch ein Rohr gebildet sein kann, ist an der Seitenwandstruktur 5 des Fahrzeuges angeschlossen (fliegender Anschluß). Zusätzlich besteht die hier nicht gezeigte Möglichkeit, die Tragachse 3 an ihrer von der Seitenwandstruktur 5 abgewandten Seite gegenüber dem Fahrzeugboden 6 abzustützen.

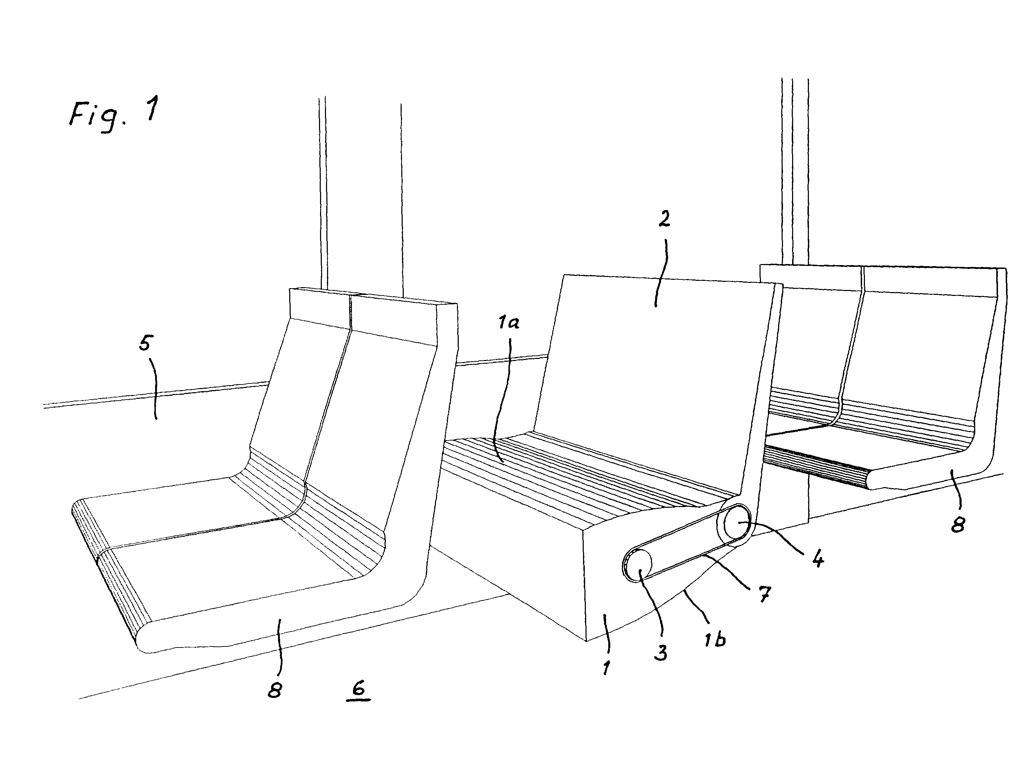

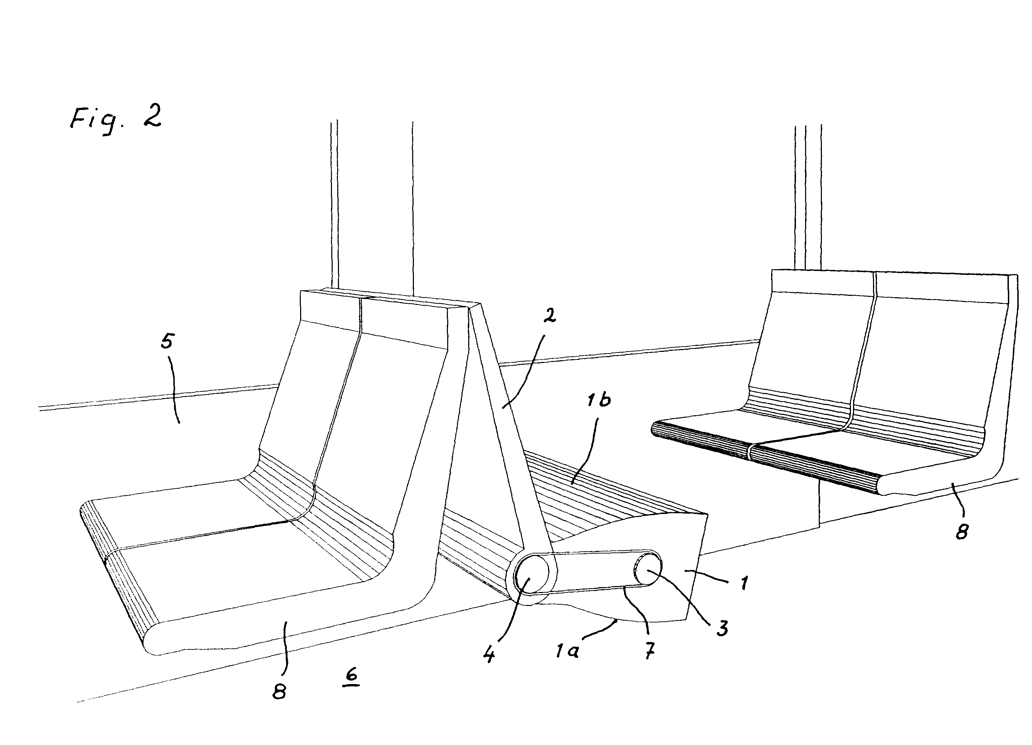

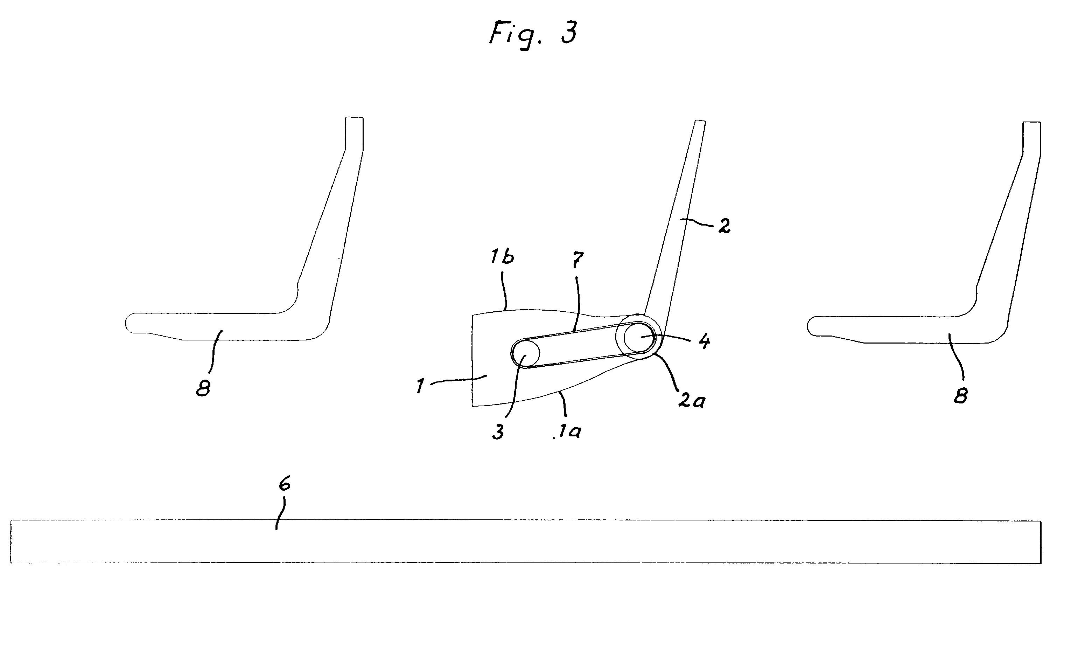

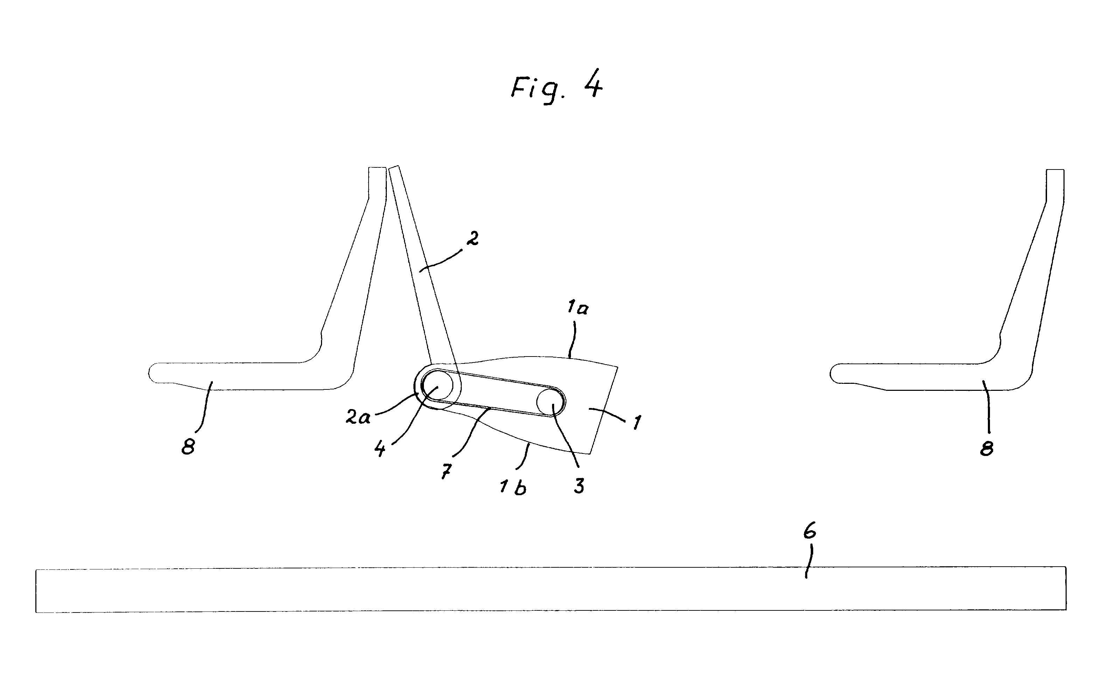

Wie aus Fig. 1 bis 4 ersichtlich ist, sind die Tragachse 3 und die Drehachse 4 durch ein als Übertragungsmittel dienendes Band 7 aus Metall gekoppelt, das an den beiden Achsen 3 und 4 z. B. durch Nieten befestigt ist. Als Übertragungsmittel ist alternativ ein Zahnriemen oder eine Kette einsetzbar. Durch die vorgenannte Koppelung der Achsen 3 und 4 wird erreicht, daß bei den Schwenkbewegungen des Sitzkörpers 1 in eine der beiden Stellungen die Rückenlehne 2 automatisch und synchron ihre entsprechend zugehörige nutzbare Position einnimmt. Die Rückenlehne 2 ist in ihrem unteren Bereich mit einer in Richtung der Drehachse 4 weisenden Abwinkelung 2a versehen, durch die die Beinfreiheit vergrößert wird. Die zuvor beschriebene Mechanik, die hier im Sinne der leichteren Erkennbarkeit sichtbar gezeichnet ist, liegt vollständig verdeckt im Inneren des realen Fahrgastsitzes.

### Liste der Bezugszeichen

- 1: Sitzkörper
- 1a: erste Sitzfläche
- 1b: zweite Sitzfläche
- 2: Rückenlehne
- 2a: Abwinkelung
- 3: Tragachse
- 4: Drehachse
- 5: Seitenwandstruktur
- 6: Fahrzeugboden
- 7: Band als Übertragungsmittel
- 8: feststehender Fahrgastsitz

## Patentansprüche

1. Bidirektionaler Fahrgastsitz für Busse und Bahnen, bestehend aus einem Sitzkörper (1) mit einer Sitzfläche (1a) und einer Rückenlehne (2), dadurch gekennzeichnet, daß der Sitzkörper (1) unterhalb seiner einen, ersten Sitzfläche (1a) eine weitere, zweite Sitzfläche (1b) aufweist und um eine außermittig durch den Sitzkörper (1) verlaufende Tragachse (3) im Sinne einer wahlweisen Nutzbarkeit der ersten Sitzfläche (1a) oder der zweiten Sitzfläche (1b) schwenkbar ist, wobei der Sitzkörper (1) und die Rückenlehne (2) durch eine Drehachse (4) miteinander gekoppelt sind.

2. Fahrgastsitz nach Anspruch 1, dadurch gekennzeichnet, daß die Tragachse (3) an der Seitenwandstruktur (5) des Fahrzeuges befestigt (fliegender Anschluß) und eventuell zusätzlich an ihrer von der Seitenwandstruktur (5) abgewandten Seite gegenüber dem Fahrzeugboden (6) abgestützt ist.

3. Fahrgastsitz nach Anspruch 1 oder 2, dadurch gekennzeichnet, daß die Tragachse (3) und/oder die Drehachse (4) durch ein Rohr gebildet ist.

4. Fahrgastsitz nach einem der Ansprüche 1 bis 3, dadurch gekennzeichnet, daß die Tragachse (3) und die Drehachse (4) durch ein Übertragungsmittel - beispielsweise Band (7), Zahnriemen oder Kette - derart gekoppelt sind, daß bei den Schwenkbewegungen des Sitzkörpers (1) in eine der beiden Stellungen die Rückenlehne (2) ihre entsprechend zugehörige nutzbare Position einnimmt.

5. Fahrgastsitz nach Anspruch 4, dadurch gekennzeichnet, daß das als Übertragungsmittel dienende Band (7) aus Metall besteht.

6. Fahrgastsitz nach einem der Ansprüche 1 bis 5, dadurch gekennzeichnet, daß die Rückenlehne (2) in ihrem unteren Bereich mit einer in Richtung der Drehachse (4) weisenden Abwinkelung (2a) versehen ist.
